(19) Europäisches Patentamt
European Patent Office
Office européen des brevets

(11) EP 2 431 631 A1

(12) **EUROPÄISCHE PATENTANMELDUNG**

(43) Veröffentlichungstag:
21.03.2012 Patentblatt 2012/12

(51) Int Cl.:
*F16F 7/104* *(2006.01)*

(21) Anmeldenummer: 11177502.9

(22) Anmeldetag: 12.08.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 17.09.2010 EP 10177472

(71) Anmelder: SULZER PUMPEN AG
8401 Winterthur (CH)

(72) Erfinder: Pesek, Tomas
8409 Winterthur (CH)

(74) Vertreter: Sulzer Management AG
Patentabteilung / 0067
Zürcherstrasse 14
8401 Winterthur (CH)

(54) **Vorrichtung und Verfahren zur Schwingungskontrolle eines Steigrohres einer Vertikalpumpe**

(57) Es wird eine Vorrichtung (10) zur Schwingungskontrolle eines Steigrohres (3) einer Vertikalpumpe vorgestellt, das im Betrieb zu Schwingungen angeregt wird, und das eine Längsrichtung aufweist. Die Vorrichtung (10) ist aussen am Steigrohr platzierbar und umfasst ein Schwingungselement (7.1, 7.2), ein oder mehrere Federelemente (8.1 - 8.4) und eine Führung, wobei das Schwingungselement eine Öffnung aufweist, um das Steigrohr (3) zu umschliessen, und mittels des oder der Federelemente (8.1-8.4) beweglich und elastisch gehalten ist, und wobei das Schwingungselement (7.1, 7.2) mittels der Führung derart geführt ist, dass die Bewegungen des Schwingungselementes im Betrieb auf Bewegungen in einer Ebene senkrecht zur Längsrichtung des Steigrohrs beschränkt sind.

Fig.3

EP 2 431 631 A1

**Beschreibung**

Die Erfindung betrifft eine Vorrichtung zur Schwingungskontrolle eines Steigrohres einer Vertikalpumpe gemäss Oberbegriff von Anspruch 1 und ein Verfahren zur Schwingungskontrolle eines Steigrohres einer Vertikalpumpe gemäss Oberbegriff von Anspruch 10.

Zum Fördern von flüssigen Medien aus Behältern und von unter dem Flüssigkeitsspiegel liegenden Entnahmestellen werden häufig Vertikalpumpen eingesetzt, die in den Behälter beziehungsweise bis zur Entnahmestelle abgesenkt werden. Der Auslass der Vertikalpumpe ist in der Regel mit einem Steigrohr verbunden, durch welches das zu fördernde Medium weitergeleitet wird. Der Pumpenantrieb kann, wie bei Tauchpumpen üblich, an der Vertikalpumpe angeordnet sein oder an einem oberen Teil des Steigrohres, wobei in diesem Fall der Antrieb über eine im Innern der Steigrohres angeordnete Antriebswelle mit der Vertikalpumpe verbunden ist. Die Vertikalpumpe oder das Steigrohr oder der Antrieb können am Behälterboden oder an der Behälterwand oder -decke befestigt sein oder es sind eine oder mehrere Befestigungseinrichtungen vorgesehen, die typisch beabstandet von der Entnahmestelle angeordnet sind.

Das Steigrohr oder die gesamte Pumpenstruktur kann durch periodische oder stochastische Anregungskräfte, die während des Pumpenbetriebs entstehen, zu Schwingungen angeregt werden, die besonders störend sind, wenn die Frequenz der Schwingungen in der Nähe einer Resonanz- oder Eigenfrequenz des Steigrohres beziehungsweise der Pumpenstruktur liegen. Bei einer Vertikalpumpe mit Steigrohr sind Hauptschwingungen in der Regel horizontal beziehungsweise radial zur Längsrichtung des Steigrohres mit einem oder mehreren ausgeprägten Maxima und Minima entlang des Steigrohres. Zusätzlich kann sich die Richtung der Schwingungen in einer horizontalen Ebene beziehungsweise in einer Ebene senkrecht zur Längsrichtung des Steigrohres zeitlich ändern.

Das Dokument JP 2002 005097 A beschreibt ein System zum Verhindern von Schwingungen für eine vertikale Schachtpumpe. Der Antrieb der Pumpe ist auf einer Plattform installiert, von der aus die Pumpe an einem Steigrohr in einen Behälter hängt. Das System zum Verhindern von Schwingungen ist mit einem Schwingungsdämpfer ausgerüstet, der zwischen dem unteren Teil der Pumpe und dem Behälterboden angeordnet ist und die Schwingungen der Pumpe absorbiert, und mit einem Gleitzylinder, der den Schwingungsdämpfer mit dem Behälterboden verbindet. Dieses System hat den Nachteil, dass es nur angewendet werden kann, wenn unmittelbar unter der Pumpe ein Behälterboden oder eine andere Grundfläche verfügbar ist.

Aufgabe der Erfindung ist es, eine Vorrichtung und ein Verfahren zur Schwingungskontrolle eines Steigrohres einer Vertikalpumpe zur Verfügung zu stellen, die jederzeit am Steigrohr angebracht werden kann, ohne dass Veränderungen am Steigrohr oder der Pumpenkonstruktion notwendig sind, und die auch dann angewendet werden können, wenn in der Nähe der Pumpe keine Verankerungspunkte, wie zum Beispiel ein Behälterboden, zur Verfügung stehen.

Diese Aufgabe wird erfindungsgemäss durch die in Anspruch 1 definierte Vorrichtung und das in Anspruch 10 definierte Verfahren gelöst.

Die erfindungsgemässe Vorrichtung zur Schwingungskontrolle eines Steigrohres einer Vertikalpumpe, das im Betrieb zu Schwingungen angeregt wird, und das eine Längsrichtung aufweist, zeichnet sich dadurch aus, dass die Vorrichtung aussen am Steigrohr oder aussen an der Vertikalpumpe platzierbar ist, dass die Vorrichtung ein Schwingungselement, ein oder mehrere Federelemente und eine Führung umfasst, dass das Schwingungselement eine Öffnung aufweist, um das Steigrohr oder die Vertikalpumpe zu umschliessen, und mittels des oder der Federelemente beweglich und elastisch gehalten ist, und dass das Schwingungselement mittels der Führung derart geführt ist, dass die Bewegungen des Schwingungselementes im Betrieb auf Bewegungen in einer Ebene senkrecht zur Längsrichtung des Steigrohrs beschränkt sind. Das Schwingungselement kann beispielsweise ringförmig ausgebildet sein, wobei die Achse des Schwingungselementes im Betrieb typisch parallel zur Längsrichtung des Steigrohres angeordnet ist.

In einer vorteilhaften Ausführungsform umfasst die Vorrichtung zusätzlich eine Halterung, um die Vorrichtung am Steigrohr zu befestigen, wobei das Schwingungselement über das oder die Federelemente elastisch mit der Halterung verbunden ist.

Mit Vorteil sind die Vorrichtung und/oder das Schwingungselement und/oder die Halterung aus mindestens zwei Teilen oder zwei Hälften aufgebaut, die zusammengefügt werden können, um die Vorrichtung nachträglich am Steigrohr zu befestigen.

Unabhängig von der Ausführungsform oder -variante umfasst die Vorrichtung typisch drei oder vier oder mehr Federelemente.

In einer weiteren vorteilhaften Ausführungsform sind die Federelemente als federnde Stäbe ausgebildet sind, die im Betrieb vorteilhafterweise im Wesentlichen parallel zur Längsrichtung des Steigrohrs angeordnet sind.

Typisch sind die federnden Stäbe parallel zur Achse des Schwingungselementes angeordnet, wenn dieses ringförmig ausgebildet ist.

In einer weitere vorteilhaften Ausführungsform enthält die Vorrichtung zusätzlich ein oder mehrere Dämpfungselemente, die mit dem Schwingungselement und/oder der Halterung verbunden sind.

Weiter umfasst die Erfindung ein Steigrohr für eine Vertikalpumpe, welches mit einer oder mehreren Vorrichtungen nach einer oder mehreren der oben beschriebenen Ausführungsformen und -varianten versehen ist, sowie eine Vertikalpumpe mit einem Steigrohr, welche mit einer oder mehreren Vorrichtungen nach einer oder mehreren der oben beschriebenen Ausführungsformen und -varianten versehen sind.

Im erfindungsgemässen Verfahren zur Schwingungskontrolle eines Steigrohres einer Vertikalpumpe, wird das Steigrohr im Betrieb zu Schwingungen angeregt, wobei das Steigrohr eine Längsrichtung aufweist. In dem Verfahren wird zur Schwingungskontrolle ein Schwingungselement vorgesehen, welches das Steigrohr umschliesst und welches gegenüber demselben mittels eines oder mehrerer Federelemente beweglich und elastisch gehalten wird, wobei das Schwingungselement mittels einer Führung geführt wird, welche die Bewegungen des Schwingungselementes auf Bewegungen in einer Ebene senkrecht zur Längsrichtung des Steigrohrs beschränkt, und wobei das Schwingungselement und das oder die Federelemente und die Führung aussen am Steigrohr angeordnet werden.

Vorteilhafterweise wird in dem Verfahren eine Halterung vorgesehen, um das oder die Federelemente und/oder die Führung am Steigrohr zu befestigen, wobei das Schwingungselement über das oder die Federelemente elastisch mit der Halterung verbunden werden.

In einer vorteilhaften Ausführungsform des Verfahrens weisen das Schwingungselement und das oder die Federelemente eine Masse beziehungsweise eine Federkonstante auf, und die Masse des Schwingungselementes und die Federkonstante des oder der Federelemente werden derart gewählt, dass die Schwingungsamplitude oder -amplituden des Steigrohres vermindert werden.

In einer weiteren vorteilhaften Ausführungsform des Verfahrens weist das Steigrohr in Verbindung mit dem Schwingungselement beziehungsweise die Vertikalpumpe mit Steigrohr in Verbindung mit dem Schwingungselement zwei Eigenfrequenzen auf, wobei die Masse des Schwingungselementes und die Federkonstante des Federelementes beziehungsweise die Summe der Federkonstanten der Federelemente so gewählt werden, dass die Differenz zwischen der betreffenden Eigenfrequenz und der ursprünglichen Resonanzfrequenz des Steigrohres ohne Schwingungskontrolle beziehungsweise der Vertikalpumpe mit Steigrohr ohne Schwingungskontrolle mindestens 10% oder mindestens 20% der genannten Resonanzfrequenz des Steigrohres beträgt.

Unabhängig von den oben beschriebenen Ausführungsformen und -varianten kann die Schwingung des Steigrohres zusätzlich durch ein oder mehrere Dämpfungselemente bedämpft werden, die mit dem Schwingungselement verbunden sind.

Die erfindungsgemässe Vorrichtung und das erfindungsgemässe Verfahren zur Schwingungskontrolle eines Steigrohres einer Vertikalpumpe haben den Vorteil, dass zur Schwingungskontrolle keine zusätzlichen Auflage- und Abstützungspunkte notwendig sind und die Vorrichtung nachträglich an einer beliebigen Stelle des Steigrohres angebracht werden kann. Besonders vorteilhaft ist die Wirkung, wenn das in der Vorrichtung und in dem Verfahren vorgesehene Schwingungselement in einem Bereich des Steigrohres oder der Vertikalpumpe angebracht wird, in dem die Schwingungsamplitude ein Maximum aufweist. Die in der Vorrichtung und in dem Verfahren vorgesehene Führung hat darüber hinaus den Vorteil, dass unerwünschte Schwingungen des Schwingungselementes vermieden und dadurch die Schwingungskontrolle des Steigrohres vereinfacht und verbessert wird.

Die obige Beschreibung von Ausführungsformen und -varianten dient lediglich als Beispiel. Weitere vorteilhafte Ausführungsformen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen

Fig. 1     einen Schwingungszustand einer herkömmlichen Vertikalpumpe mit Steigrohr,

Fig. 2         ein Ausführungsbeispiel einer Vorrichtung gemäss vorliegender Erfindung,

Fig. 2A        das Ausführungsbeispiel aus Fig. 2 mit einem Schwingungselement in ausgelenktem Zustand,

Fig. 3         einen Querschnitt durch das Ausführungsbeispiel aus Fig. 2,

Fig. 4A, 4B    Ausführungsvarianten für Dämpfungselemente zum Ausführungsbeispiel aus Fig. 2, und

Fig. 5         ein weiteres Ausführungsbeispiel einer Vorrichtung gemäss vorliegender Erfindung im Querschnitt, und

Fig. 6         eine schematische Darstellung eines Modells zu einer Vorrichtung gemäss vorliegender Erfindung.

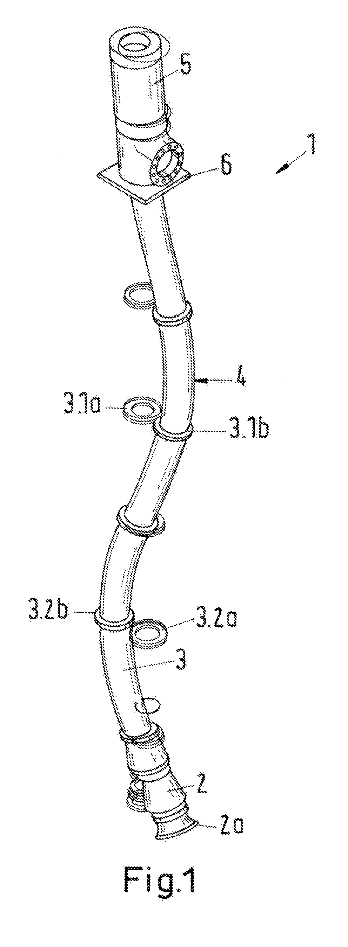

Fig. 1 zeigt einen Schwingungszustand einer herkömmlichen Vertikalpumpe 2 mit Steigrohr 3. Die Vertikalpumpe umfasst in der gezeigten Anordnung 1 zudem einen Antrieb 5, der auf einer Befestigungsplattform 6 installiert ist. Von Der Befestigungsplattform kann die Pumpe 2 am Steigrohr in einen nicht gezeigten Behälter gehängt oder zu einer Entnahmestelle abgesenkt werden. Bei Bedarf kann der Einlass der Vertikalpumpe zudem mit einem Saugtrichter 2a versehen sein. Die in Fig. 1 gezeigte Anordnung 1 ist ausschliesslich über die Befestigungsplattform 6 abgestützt während die Vertikalpumpe 2 und das Steigrohr keine zusätzlichen Abstützungen aufweisen. Der in Fig. 1 gezeigte Schwingungszustand des Steigrohres wurde mittels Modalanalyse unter Verwendung der Finite Element Analysis (FEA) berechnet. Die Markierungen 3.1a, 3.2a entsprechen dabei der Ruhelage des Steigrohres, während die Bezugszeichen 3.1 b, 3.2b die entsprechenden Stellen des Steigrohres im gezeigten Schwingungszustand bezeichnen. Die Schwingungsamplitude erreicht in der in Fig. 1 gezeigten Anordnung ein Maximum 4 nach rund einem Drittel der Steigrohrlänge von der Befestigungsplattform aus gemessen.

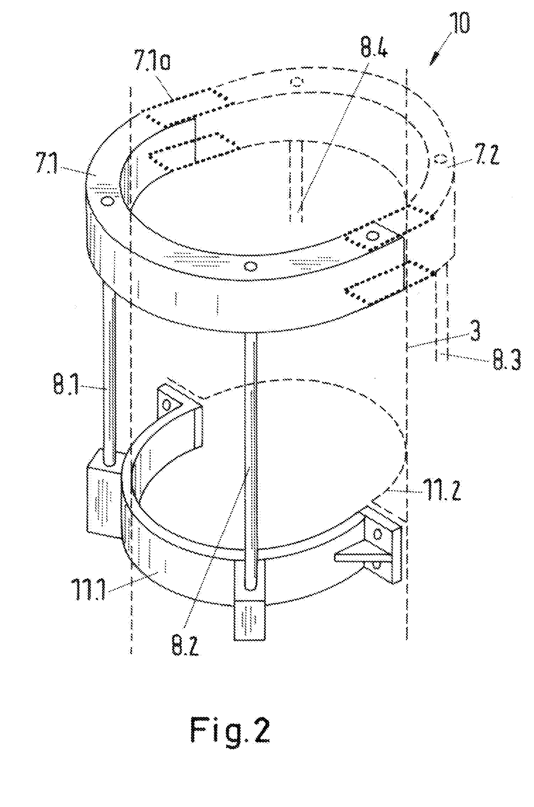

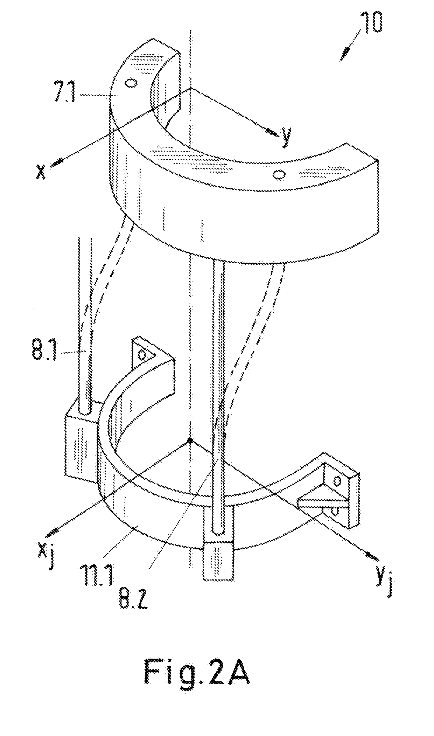

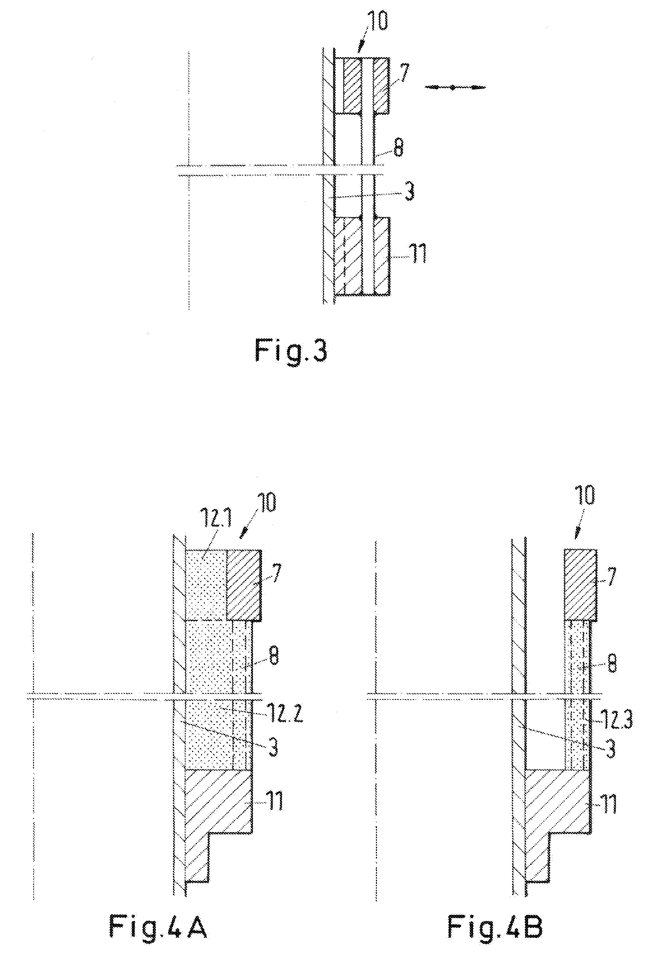

Die Figuren 2 und 3 zeigen ein Ausführungsbeispiel einer erfindungsgemässen Vorrichtung 10 zur Schwingungskontrolle eines Steigrohres 3 einer Vertikalpumpe, wobei das Steigrohr eine Längsrichtung aufweist und im Betrieb zu Schwingungen angeregt wird. Die Vorrichtung 10 ist, wie in den Figuren 2 und 3 gezeigt, aussen am Steigrohr 3 oder fallweise aussen an der Vertikalpumpe platzierbar und umfasst ein Schwingungselement 7, 7.1, 7.2, ein oder mehrere Federelemente 8, 8.1-8.4 und eine Führung, wobei das Schwingungselement eine Öffnung aufweist, um das Steigrohr 3 zu umschliessen, und mittels des oder der Federelemente beweglich und elastisch gehalten ist, und wobei das Schwingungselement 7, 7.1, 7.2 mittels der Führung derart geführt ist, dass die Bewegungen des Schwingungselementes im Betrieb auf Bewegungen in einer Ebene senkrecht zur Längsrichtung des Steigrohrs beschränkt sind. Das Schwingungselement kann beispielsweise, wie in Fig. 2 gezeigt, ringförmig ausgebildet sein, wobei die Achse des Schwingungselementes im Betrieb typisch parallel zur Längsrichtung des Steigrohres angeordnet ist.

In einer vorteilhaften Ausführungsform umfasst die Vorrichtung 10 zusätzlich eine Halterung 11, 11.1, 11.2, um die Vorrichtung am Steigrohr 3 zu befestigen, wobei das Schwingungselement 7, 7.1, 7.2 über das oder die Federelemente 8, 8.1-8.4 elastisch mit der Halterung verbunden ist.

Mit Vorteil sind die Vorrichtung 10 und/oder das Schwingungselement 7.1, 7.2 und/oder die Halterung 11.1, 11.2, wie in Fig. 2 gezeigt, aus mindestens zwei Teilen oder zwei Hälften aufgebaut, die zusammengefügt werden können, um die Vorrichtung nachträglich am Steigrohr 3 zu befestigen. Die Teile 7.1, 7.2 des Schwingungselementes können beispielsweise mittels Laschen 7.1a zusammengefügt werden, während die Halterung 11.1, 11.2 als zweiteilige Rohrschelle ausgeführt sein kann.

Unabhängig von der Ausführungsform oder -variante umfasst die Vorrichtung typisch drei oder vier oder mehr Federelemente 8, 8.1 - 8.4, die normalerweise gleichmässig, d.h. in jeweils gleichen Winkelabständen über den Umfang der Halterung 11, 11.1, 11.2 verteilt angeordnet sind.

In einer weiteren vorteilhaften Ausführungsform sind die Federelemente 8, 8.1-8.4, wie in den Figuren 2 und 3 gezeigt, als federnde Stäbe ausgebildet sind, die im Betrieb vorteilhafterweise im Wesentlichen parallel zur Längsrichtung des Steigrohrs 3 angeordnet sind. Typisch sind die federnden Stäbe parallel zur Achse des Schwingungselementes 7, 7.1, 7.2 angeordnet, wenn dieses ringförmig ausgebildet ist. Die Ausführungsform der Federelemente als federnde Stäbe hat den Vorteil, dass diese nicht nur als Federelemente 8.1-8.4 wirken, sonder dass die federnden Stäbe auch als Führung eingesetzt werden können, welche die Bewegungen des Schwingungselementes im Betrieb auf Bewegungen in einer Ebene senkrecht zur Längsrichtung des Steigrohrs beschränkt. Werden drei oder mehr federnde Stäbe vorgesehen, die parallel ausgerichtet, gleich lang und so über den Umfang der Halterung 11.1, 11.2 verteilt sind, dass der Winkelabstand zwischen benachbarten Stäben nicht grösser als 150° ist, so wirken die Stäbe bei Auslenkungen des Schwingungselementes 7.1, 7.2 als Parallelogrammführung, die Kippbewegungen gegenüber der Längsrichtung des Steigrohres verhindert.

In einer weitere vorteilhaften Ausführungsform enthält die Vorrichtung 10 zusätzlich ein oder mehrere Dämpfungselemente, die mit dem Schwingungselement 7 und/oder der Halterung 11 verbunden sind. Die Figuren 4A und 4B zeigen Ausführungsvarianten für Dämpfungselemente 12.1, 12.2, 12.3 zum Ausführungsbeispiel aus Fig. 2. Bezüglich Einzelheiten und Ausführungsformen zur Vorrichtung 10 wird auf die oben stehende Beschreibung der Figuren 2 und 3 verwiesen. Ein Dämpfungselemente 12.1 kann beispielsweise, wie in Fig. 4A gezeigt, zwischen den Steigrohr 3 und der Schwingmasse 7 angeordnet sein. Das Dämpfungselement 12.1 kann dabei als konzentrischer Ring ausgebildet sein oder mehrere separaten Dämpfungselementen umfassen, die über die dem Steigrohr zugewandte Innenseite des Schwingungselementes verteilt sind. In diesem Fall sind die Dämpfungselemente 12.1 typisch gleichmässig über den Umfang des Steigrohrs verteilt.

Das Dämpfungselement kann aber auch, wie in Fig. 4A gezeigt, als Rohr 12.2 ausgebildet sein, das konzentrisch zum Steigrohr angeordnet ist und bei Bedarf die Federelemente 8 teilweise oder ganz umhüllt. Weiter kann das Dämpfungselement, wie in Fig. 4B gezeigt, als Hülse 12.3 ausgebildet sein, die konzentrisch zum Steigrohr angeordnet ist und die Federelemente 7 teilweise oder ganz umhüllt.

Die oben beschriebenen Ausführungsvarianten für Dämpfungselemente können einzeln oder als Kombination von zwei oder drei der Ausführungsvarianten eingesetzt werden. Die Dämpfungselemente 12.1, 12.2, 12.3 enthalten mit Vorteil eine dämpfenden Stoff oder eine dämpfende Struktur, beispielsweise einen Schaumstoff, der mit einer zähen Flüssigkeit getränkt und vorzugsweise umhüllt ist, oder ein Drahtgewebe oder Drahtgeflecht, das bei Bedarf umhüllt sein kann.

Fig. 2A zeigt das Ausführungsbeispiel aus Fig. 2 mit einem Schwingungselement 7.1 in ausgelenktem Zustand, wobei die ebenda gezeigte Vorrichtung 10 zur Schwingungskontrolle eines Steigrohres einer Vertikalpumpe zwei Hälften umfasst, von denen in Fig. 2A nur eine Hälfte dargestellt ist. Die nicht gezeigte Hälfte ist gegengleich aufgebaut und gegenüber der Ruhelage in dieselbe Richtung ausgelenkt wie die in Fig. 2A gezeigte Hälfte. In Fig. 2A sind zudem die Koordinatenachsen X und Y für die Lage des Schwingungselementes 7.1 gegenüber der Ruhelage des Steigrohres und die Koordinatenachsen $X_j$ und $Y_j$ für die Stelle des Steigrohres angegeben, an der die Halterung 11.1 befestigt ist.

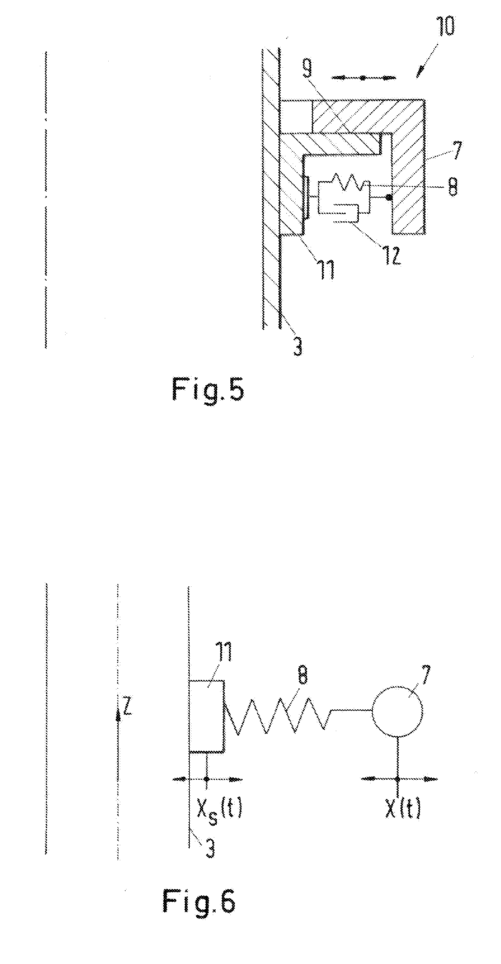

Fig. 5 zeigt ein weiteres Ausführungsbeispiel einer erfindungsgemässen Vorrichtung 10 zur Schwingungskontrolle eines Steigrohres 3 einer Vertikalpumpe, wobei das Steigrohr eine Längsrichtung aufweist und im Betrieb zu Schwingungen angeregt wird. Die Vorrichtung 10 ist, wie in Fig. 5 gezeigt, aussen am Steigrohr 3 platzierbar und umfasst ein Schwingungselement 7, ein oder mehrere Federelemente 8 und eine Führung 9, wobei das Schwingungselement eine Öffnung aufweist, um das Steigrohr 3 zu umschliessen, und mittels des oder der Federelemente beweglich und elastisch gehalten ist, und wobei das Schwingungselement 7 mittels der Führung 9 derart geführt ist, dass die Bewegungen des Schwingungselementes im Betrieb auf Bewegungen in einer Ebene senkrecht zur Längsrichtung des Steigrohrs beschränkt sind. Das Schwingungselement 7 ist typisch, wie in Fig. 5, mit einer kreisförmigen Öffnung versehen, die im Ruhezustand konzentrisch zum Steigrohr angeordnet sein kann.

Vorteilhafterweise umfasst das Schwingungselement 7 einen axial verlaufenden Teil, beispielsweise einen zylinderförmigen Teil, und einen radial verlaufenden Teil, beispielsweise in Form einer ringförmigen Scheibe, der mit dem axial verlaufenden Teil verbunden ist.

In einer vorteilhaften Ausführungsform umfasst die Vorrichtung 10 zusätzlich eine Halterung 11, mit der die Vorrichtung am Steigrohr 3 befestigt werden kann, wobei das Schwingungselement 7 über das oder die Federelemente 8 elastisch mit der Halterung verbunden ist. In einer vorteilhaften Ausführungsvariante ist die Halterung 11, wie in Fig. 5 gezeigt, gleichzeitig als Führung ausgebildet, beispielsweise indem an der Halterung eine oder mehrere radial verlaufende Führungsflächen 9 vorgesehen sind, um die Bewegungen des Schwingungselementes 7 im Betrieb auf Bewegungen in einer Ebene senkrecht zur Längsrichtung des Steigrohrs zu beschränken. Die Führungsfläche oder -flächen 9 können als Gleitflächen ausgebildet sein, beispielsweise indem sie mit einer gleitfähigen Auflage, zum Beispiel einer Teflonauflage, versehen werden.

Mit Vorteil sind die Vorrichtung 10 und/oder das Schwingungselement 7 und/oder die Halterung 11 aus mindestens zwei Teilen oder zwei Hälften aufgebaut, die zusammengefügt werden können, um die Vorrichtung nachträglich am Steigrohr 3 zu befestigen. Die Teile des Schwingungselementes können beispielsweise mittels Laschen zusammengefügt werden, während die Halterung 11.1, 11.2 als zweiteilige Rohrschelle ausgeführt sein kann.

Unabhängig von der Ausführungsform oder -variante kann die Vorrichtung drei oder vier oder mehr Federelemente 8 umfassen, die bei Bedarf vorgespannt und normalerweise gleichmässig, d.h. in jeweils gleichen Winkelabständen über den Umfang der Halterung 11 verteilt angeordnet sind. Es ist jedoch auch möglich, als Federelement einen elastischen verformbaren Ring vorzusehen, der zwischen dem Schwingungselement 7 und der Halterung 11 angeordnet ist.

In einer weitere vorteilhaften Ausführungsform enthält die Vorrichtung 10 zusätzlich ein oder mehrere Dämpfungselemente 12, die mit dem Schwingungselement 7 und/oder der Halterung 11 verbunden sind. Beispielsweise können drei oder vier oder mehr Feder-/Dämpfungselemente vorgesehen sein, die typisch gleichmässig, d.h. in jeweils gleichen Winkelabständen über den Umfang der Halterung 11 verteilt angeordnet sind. Es ist jedoch auch möglich, als Feder-/Dämpfungselement einen viskoelastischen Ring vorzusehen, der zwischen dem Schwingungselement 7 und der Halterung 11 angeordnet ist, und der beispielsweise ein mit zäher Flüssigkeit gefülltes Drahtgewebe enthalten kann. Zusätzlich zu diesen Möglichkeiten oder an Stelle derselben können die Führung oder die Führungsflächen 9 als Dämpfungselemente verwendet werden, indem sie beispielweise mit einer kontrollierten Reibung versehen werden.

Darüber hinaus umfasst die Erfindung ein Steigrohr 3 für eine Vertikalpumpe, welches mit einer oder mehreren Vorrichtungen 10 nach einer oder mehreren der oben beschriebenen Ausführungsformen und -varianten versehen ist, sowie eine Vertikalpumpe mit Steigrohr 3, welche mit einer oder mehreren Vorrichtungen 10 nach einer oder mehreren der oben beschriebenen Ausführungsformen und -varianten versehen sind.

Das erfindungsgemässe Verfahren zur Schwingungskontrolle eines Steigrohres einer Vertikalpumpe wird im Folgenden an Hand der Figuren 2, 2A und 3 beschrieben. In dem Verfahren wird das Steigrohr 3 im Betrieb zu Schwingungen angeregt, wobei das Steigrohr eine Längsrichtung aufweist. Zur Schwingungskontrolle wird ein Schwingungselement 7, 7.1, 7.2 vorgesehen, welches das Steigrohr 3 umschliesst und welches gegenüber demselben mittels eines oder mehreren Federelemente 8, 8.1 - 8.4 beweglich und elastisch gehalten wird, wobei das Schwingungselement 7, 7.1, 7.2 mittels einer Führung geführt wird, welche die Bewegungen des Schwingungselementes auf Bewegungen in einer Ebene senkrecht zur Längsrichtung des Steigrohrs 3 beschränkt, und wobei das Schwingungselement 7, 7.1, 7.2 und das oder die Federelemente 8, 8.1 - 8.4 und die Führung aussen am Steigrohr angeordnet werden. Vorteilhafterweise wird in dem Verfahren eine Halterung 11, 11.1, 11.2 vorgesehen, mittels welcher das oder die Federelemente 8, 8.1 - 8.4 und/oder die Führung am Steigrohr 3 befestigt sind, wobei das Schwingungselement 7, 7.1, 7.2 über das oder die Federelemente 8, 8.1 - 8.4 elastisch mit der Halterung verbunden werden 11, 11.1, 11.2.

In einer vorteilhaften Ausführungsform des Verfahrens weisen das Schwingungselement 7, 7.1, 7.2 und das oder die Federelemente 8, 8.1 - 8.4 eine Masse m beziehungsweise eine Federkonstante k auf, und die Masse m des Schwingungselementes und die Federkonstante k des oder der Federelemente werden derart gewählt, dass die Schwingungsamplitude oder -amplituden des Steigrohres 3 vermindert werden.

In einer weiteren vorteilhaften Ausführungsform des Verfahrens weist das Steigrohr 3 in Verbindung mit dem Schwingungselement beziehungsweise die Vertikalpumpe mit Steigrohr in Verbindung mit dem Schwingungselement 7, 7.1, 7.2 zwei Eigenfrequenzen $f_1$, $f_2$ auf, wobei die Masse m des Schwingungselementes und die Federkonstante k des Federelementes beziehungsweise die Summe der Federkonstanten der Federelemente so gewählt werden, dass die Differenz $\Delta f$ zwischen der betreffenden Eigenfrequenz $f_1$, $f_2$ und der ursprünglichen Resonanzfrequenz $f_m$ des Steigrohres ohne Schwingungskontrolle mindestens 10% oder mindestens 20% der genannten Resonanzfrequenz $f_m$ des Steigrohres beträgt.

Die Auslegung der Vorrichtung zur Schwingungskontrolle eines Steigrohres einer Vertikalpumpe und speziell die Bestimmung der Masse m des Schwingungselementes und der Federkonstante k der Federelemente umfasst typisch zwei Schritte. In einem ersten Schritt wird das Schwingungsverhalten des Steigrohres ohne Schwingungskontrolle bestimmt und in einem zweiten Schritt das Schwingungsverhalten des Steigrohres mit Schwingungskontrolle.

Das ursprüngliche Schwingungsverhalten des Steigrohres ohne Schwingungskontrolle kann dynamisch durch die Resonanzfrequenz charakterisiert werden, d.h. das Steigrohr wird als Masseschwinger aufgefasst mit der Modalparametergleichung

$$M_m \cdot \ddot{q} + K_m \cdot q = \sum \alpha_{m,j} \cdot F_j(t)$$

und den Modalparametern

$Mm$ = modale Masse der Vertikalpumpe mit Steigrohr

$Km$ = modale Steifigkeit der Vertikalpumpe mit Steigrohr

$\alpha_{m,j}$ = Eigenvektor (Verschiebung oder Drehung) an der Stelle $j$

des Steigrohres, an welcher die Kraft $F_j(t)$ wirkt

$F_j(t)$ = äussere Anregungskraft oder Drehmoment, welche bzw.

welches an der Stelle j auf das Steigrohr wirkt

und $q(t)$ = generalisierte Koordinate

Die Modalparameter $Mm$, $Km$, $\alpha_{m,j}$ können mittels klassischer Modalanalyse, d.h. mittels Schwingungsanregung des Steigrohres und Messung der Schwingungsantwort, oder rein rechnerisch mittels Finiter Element Analyse (FEA) des Steigrohres bestimmt werden.

Aus den derart bestimmten Modalparametern $Mm$ und $Km$ lässt sich die ursprüngliche Resonanzfrequenz $f_m$ des Steigrohres ohne Schwingungskontrolle mit der folgenden Formel berechnen:

$$f_m = \frac{1}{2\pi} \sqrt{\frac{K_m}{M_m}}$$

Für die Bestimmung des Schwingungsverhaltens des Steigrohres mit Schwingungskontrolle kann das nachstehende Modell verwendet werden, das im Folgenden an Hand von Fig. 6 näher erläutert wird. Das Modell umfasst eine Steigleitung 3 mit einer Längsrichtung oder axialen Richtung Z, eine Halterung 11, die an der Steigleitung befestigt ist, ein Federelement 8 mit der Federkonstante k und ein Schwingungselement 7 mit der Masse m, das über das Federelement mit der Halterung gekoppelt ist. In Fig. 6 ist keine Führung eingezeichnet, welche die Bewegungen des Schwingungselementes 7 im Betrieb auf Bewegungen in einer Ebene senkrecht zur Längsrichtung des Steigrohrs beschränkt. Stattdessen wird in dem Modell die Z-Koordinate des Schwingungselementes gleich Null gesetzt, d.h. das Modell geht davon aus, dass keine Bewegung des Schwingungselementes in Z-Richtung auftritt.

Die Schwingungen des Schwingungselementes 7 sind durch die Funktionen $X(t)$ und $Y(t)$ charakterisiert, während die Schwingungen der Halterung 11 an der Stelle j des Steigrohres durch die Funktionen $X_s(t)$ und $Y_s(t)$ gegeben sind. Die Funktionen $X_s(t)$ und $Y_s(t)$ können dabei wie folgt umgeformt werden:

$$X_s(t) = X_j \cdot q(t) \quad \text{und} \quad Y_s(t) = Y_j \cdot q(t)$$

mit $X_j$, $Y_j$ = normierte Eigenverschiebungen an der Stelle $j$ des Steigrohres ohne Schwingungskontrolle

$q(t)$ = generalisierte Bewegungskoordinate für das Steigrohr ohne Schwingungskontrolle

In Fig. 6 sind der Einfachheit halber nur die Schwingungen $X_s(t)$ und $X(t)$ des Schwingungselementes 7 und der Halterung 11 in X-Richtung dargestellt.

Falls keine äusseren Kräfte auf das mit dem Schwingungselement 7 ausgerüstete Steigrohr wirken und die Masse $m_s$ der Halterung 11 berücksichtigt wird, erhält man für das Modell das folgende frei schwingende System:

$$\begin{bmatrix} M_m^* & 0 & 0 \\ 0 & m & 0 \\ 0 & 0 & m \end{bmatrix} \begin{pmatrix} \ddot{q} \\ \ddot{X} \\ \ddot{Y} \end{pmatrix} + \begin{bmatrix} K_m^* & -k \cdot X_j & -k \cdot Y_j \\ -k \cdot X_j & k & 0 \\ -k \cdot Y_j & 0 & k \end{bmatrix} \begin{pmatrix} q \\ X \\ Y \end{pmatrix} = 0$$

mit den Hilfsgrössen

$$M_m^* = M_m + m_s \cdot \left( X_j^2 + Y_j^2 \right)$$

$$K_m^* = K_m + k_s \cdot \left( X_j^2 + Y_j^2 \right)$$

und den Modalparametern

$Mm$ = modale Masse der Vertikalpumpe mit Steigrohr

$Km$ = modale Steifigkeit der Vertikalpumpe mit Steigrohr

$X_j$, $Y_j$ = normierte Eigenverschiebungen oder fallweise Eigendrehungen an der Stelle j des Steigrohres, an der das Schwingungselement befestigt ist

und $q(t)$ = generalisierte Bewegungskoordinate

$m_s$ = Masse der Halterung

$m$ = Masse des Schwingelementes

$k$ = Federkonstante des Federelementes

Für die Auslegung der Schwingungskontrolle werden zweckmässigerweise die Eigenfrequenzen $f_1$, $f_2$ des obigen Systems bestimmt. Diese ergeben sich aus der Bestimmungsgleichung:

$$\omega^4 - \left( \frac{K_m^*}{M_m^*} + \frac{k}{m} \right) \omega^2 + \frac{k}{m} \left( \frac{K_m^*}{M_m^*} - \frac{k}{M_m^*} \left( X_j^2 + Y_j^2 \right) \right) = 0$$

mit $\omega$ = Kreisfrequenz des Systems

Diese Bestimmungsgleichung hat zwei positive Lösungen $\omega_1^2$ und $\omega_2^2$, aus denen sich die Eigenfrequenzen $f_1$, $f_2$ mit Hilfe der Beziehungen

$$f_1 = \frac{1}{2\pi} \omega_1 \quad \text{und} \quad f_2 = \frac{1}{2\pi} \omega_2$$

ermitteln lassen.

Für die Auslegung der Schwingungskontrolle und speziell um die Eigenschwingungen zu unterdrücken benötigt man die modale Masse $Mm$, der Vertikalpumpe mit Steigrohr, die modale Steifigkeit $Km$, und die Eigenverschiebungen

$X_j$, $Y_j$ an der Stelle j des Steigrohres, an der das Schwingungselement befestigt ist, sowie die Masse m des Schwingungselementes 7, die Federkonstante $k$ des Federelementes 8 und fallweise die Masse $m_s$ der Halterung 11. Die Grössen $m, k,$ und $m_s$ werden vorteilhafterweise so gewählt beziehungsweise so angepasst, dass

- die Resonanz bei der ursprüngliche Resonanzfrequenz $f_m$ des Steigrohres unterdrückt wird, und

- der Frequenzabstand zwischen der jeweiligen Eigenfrequenz $f_1$, $f_2$ und der ursprüngliche Resonanzfrequenz $f_m$ des Steigrohres oder fallweise der Anregungsfrequenz genügend gross ist.

Diese Bedingungen sind normalerweise erfüllt, wenn der Frequenzabstand zwischen der jeweiligen Eigenfrequenz $f_1$, $f_2$ und der ursprüngliche Resonanzfrequenz $f_m$ des Steigrohres oder fallweise der Anregungsfrequenz mindestens 10% oder mindestens 20% der genannten Resonanzfrequenz $f_m$ des Steigrohres beziehungsweise der Anregungsfrequenz beträgt.

Um die Masse m des Schwingungselementes 7 klein zu halten, ist es zudem vorteilhaft, das Schwingungselement in einem Bereich des Steigrohres 3 oder der Vertikalpumpe anzubringen, in dem die Schwingungsamplitude ein Maximum aufweist.

Unabhängig von den oben beschriebenen Ausführungsformen und -varianten können die Schwingungen des Steigrohres 3 zusätzlich durch ein oder mehrere Dämpfungselemente 12, 12.1 - 12.3 bedämpft werden, die mit dem Schwingungselement 7, 7.1, 7.2 verbunden sind. Dämpfungselemente sind vor allem dann vorteilhaft, wenn das Steigrohr oder die Vertikalpumpe mit Steigrohr mit stochastischen oder periodischen Anregungskräften angeregt werden, die eine grössere Frequenzbandbreite aufweisen und die auch die Eigenfrequenzen $f_1$, $f_2$ umfassen. In diesem Fall können die Resonanzen bei den Eigenfrequenzen $f_1$, $f_2$ nicht vermieden werden. Dank der Dämpfungselemente ist es mögliche, die Resonanzen bei den Eigenfrequenzen $f_1$, $f_2$ wirksam zu dämpfen.

Die beschrieben Ausführungsformen und -varianten der erfindungsgemässen Vorrichtung und des erfindungsgemässen Verfahrens zur Schwingungskontrolle eines Steigrohres einer Vertikalpumpe haben den Vorteil, dass störende Schwingungen in einem weiten Frequenzbereich unterdrückt oder gedämpft werden können, und dass hierzu neben der ursprünglich vorgesehenen Abstützung der Steigleitung und/oder Vertikalpumpe keine zusätzlichen Auflage- und Abstützungspunkte notwendig sind. Die in der Vorrichtung und in dem Verfahren vorgesehene Führung hat darüber hinaus den Vorteil, dass unerwünschte Schwingungen des Schwingungselementes vermieden und dadurch die Schwingungskontrolle des Steigrohres verbessert wird.

**Patentansprüche**

1.  Vorrichtung zur Schwingungskontrolle eines Steigrohres (3) einer Vertikalpumpe, das im Betrieb zu Schwingungen angeregt wird, und das eine Längsrichtung aufweist, **dadurch gekennzeichnet, dass** die Vorrichtung (10) aussen am Steigrohr platzierbar ist, dass die Vorrichtung ein Schwingungselement (7, 7.1, 7.2), ein oder mehrere Federelemente (8, 8.1 - 8.4) und eine Führung (9) umfasst, dass das Schwingungselement eine Öffnung aufweist, um das Steigrohr zu umschliessen, und mittels des oder der Federelemente beweglich und elastisch gehalten ist, und dass das Schwingungselement (7, 7.1, 7.2) mittels der Führung (9) derart geführt ist, dass die Bewegungen des Schwingungselementes im Betrieb auf Bewegungen in einer Ebene senkrecht zur Längsrichtung des Steigrohrs beschränkt sind.

2.  Vorrichtung nach Anspruch 1 umfassend zusätzlich eine Halterung (11, 11.1, 11.2), um die Vorrichtung (10) am Steigrohr (3) zu befestigen, wobei das Schwingungselement (7, 7.1, 7.2) über das oder die Federelemente (8, 8.1 - 8.4) elastisch mit der Halterung verbunden ist.

3.  Vorrichtung nach einem der Ansprüche 1 oder 2, wobei das Schwingungselement (7, 7.1, 7.2) ringförmig ausgebildet ist.

4.  Vorrichtung nach einem der vorangehenden Ansprüche, wobei die Vorrichtung (10) und/oder das Schwingungselement (7, 7.1, 7.2) und/oder die Halterung (11, 11.1, 11.2) aus mindestens zwei Teilen oder zwei Hälften aufgebaut sind, die zusammengefügt werden können, um die Vorrichtung (10) nachträglich am Steigrohr (3) zu befestigen.

5.  Vorrichtung nach einem der vorangehenden Ansprüche, wobei die Vorrichtung (10) drei oder vier oder mehr Federelemente (8, 8.1 - 8.4) umfasst.

6.  Vorrichtung nach einem der vorangehenden Ansprüche, wobei die Federelemente (8, 8.1 - 8.4) als federnde Stäbe ausgebildet sind, die im Betrieb im Wesentlichen parallel zur Längsrichtung des Steigrohrs (3) angeordnet sind, und insbesondere parallel zur Achse des Schwingungselementes (7, 7.1, 7.2), wenn dieses ringförmig ausgebildet ist.

7. Vorrichtung umfassend zusätzlich ein oder mehrere Dämpfungselemente (12, 12.1 - 12.3), die mit dem Schwingungselement (7, 7.1, 7.2) und/oder der Halterung (11, 11.1, 11.2) verbunden sind.

8. Steigrohr (3) für eine Vertikalpumpe, das mit einer oder mehreren Vorrichtungen (10) nach einem der Ansprüche 1 bis 7 versehen ist.

9. Vertikalpumpe (1) mit Steigrohr, welche mit einer oder mehreren Vorrichtungen (10) nach einem der Ansprüche 1 bis 7 versehen sind.

10. Verfahren zur Schwingungskontrolle eines Steigrohres (3) einer Vertikalpumpe, das im Betrieb zu Schwingungen angeregt wird und das eine Längsrichtung aufweist, **dadurch gekennzeichnet, dass** zur Schwingungskontrolle ein Schwingungselement (7, 7.1, 7.2) vorgesehen wird, welches das Steigrohr (3) umschliesst und welches gegenüber demselben mittels eines oder mehreren Federelementen (8, 8.1 - 8.4) beweglich und elastisch gehalten wird, dass das Schwingungselement (7, 7.1, 7.2) mittels einer Führung (9) geführt wird, welche die Bewegungen des Schwingungselementes auf Bewegungen in einer Ebene senkrecht zur Längsrichtung des Steigrohrs beschränkt, und dass das Schwingungselement (7, 7.1, 7.2) und das oder die Federelemente (8, 8.1 - 8.4) und die Führung (9) aussen am Steigrohr (3) angeordnet werden.

11. Verfahren nach Anspruch 10, wobei eine Halterung (11, 11.1, 11.2) vorgesehen wird, mittels welcher das oder die Federelemente (8, 8.1 - 8.4) und/oder die Führung (9) am Steigrohr (3) befestigt sind, wobei das Schwingungselement (7, 7.1, 7.2) über das oder die Federelemente (8, 8.1 - 8.4) elastisch mit der Halterung verbunden werden.

12. Verfahren nach einem der Ansprüche 10 oder 11, wobei das Schwingungselement (7, 7.1, 7.2) eine Masse ($m$) und das oder die Federelemente (8, 8.1 - 8.4) eine Steifigkeit ($k$) aufweisen, und die Masse des Schwingungselementes und die Steifigkeit des oder der Federelemente derart gewählt werden, dass die Schwingungsamplitude oder -amplituden des Steigrohres (3) vermindert werden.

13. Verfahren nach einem der Ansprüche 10 bis 12, wobei das Steigrohr (3) in Verbindung mit dem Schwingungselement (7, 7.1, 7.2) zwei Eigenfrequenzen ($f_1$, $f_2$) aufweist, und wobei die Masse ($m$) des Schwingungselementes und die Steifigkeit ($k$) des Federelementes (8, 8.1 - 8.4) beziehungsweise die Summe der Steifigkeiten der Federelemente so gewählt werden, dass die Differenz ($\Delta f$) zwischen der jeweiligen Eigenfrequenz ($f_1$, $f_2$) und der ursprünglichen Resonanzfrequenz ($f_m$) des Steigrohres ohne Schwingungskontrolle mindestens 10% oder mindestens 20% der genannten Resonanzfrequenz ($f_m$) des Steigrohres beträgt.

14. Verfahren nach einem der Ansprüche 10 bis 13, wobei die Schwingung des Steigrohres (3) zusätzlich durch ein oder mehrere Dämpfungselemente (12, 12.1 - 12.3) bedämpft wird, die mit dem Schwingungselement (7, 7.1, 7.2) verbunden sind.

Fig.1

Fig.2

Fig.2A

Fig.3

Fig.4A          Fig.4B

Fig.5

Fig.6

Europäisches
Patentamt

European
Patent Office

Office européen
des brevets

# EUROPÄISCHER RECHERCHENBERICHT

Nummer der Anmeldung

EP 11 17 7502

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | JP 57 043037 A (TOKYO SHIBAURA ELECTRIC CO) 10. März 1982 (1982-03-10)<br>* Abbildungen *<br>----- | 1-4,<br>6-12,14<br>5 | INV.<br>F16F7/104 |
| Y | DE 30 25 587 A1 (UHDE GMBH [DE])<br>7. Oktober 1982 (1982-10-07)<br>* Abbildungen *<br>----- | 5 | |
| A | JP 2002 005097 A (EBARA CORP)<br>9. Januar 2002 (2002-01-09)<br>* Abbildungen *<br>----- | 1 | |

| RECHERCHIERTE SACHGEBIETE (IPC) |
|---|
| F16F<br>F04D |

Der vorliegende Recherchenbericht wurde für alle Patentansprüche erstellt

| Recherchenort | Abschlußdatum der Recherche | Prüfer |
|---|---|---|
| Den Haag | 21. September 2011 | Beaumont, Arnaud |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 7502

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2011

| Im Recherchenbericht angeführtes Patentdokument | | Datum der Veröffentlichung | Mitglied(er) der Patentfamilie | | Datum der Veröffentlichung |
|---|---|---|---|---|---|
| JP 57043037 | A | 10-03-1982 | JP<br>JP | 1369067 C<br>61027614 B | 11-03-1987<br>26-06-1986 |
| DE 3025587 | A1 | 07-10-1982 | JP<br>JP<br>JP<br>US | 57025542 A<br>2029300 Y2<br>H0250541 U<br>4453693 A | 10-02-1982<br>07-08-1990<br>09-04-1990<br>12-06-1984 |
| JP 2002005097 | A | 09-01-2002 | KEINE | | |

Für nähere Einzelheiten zu diesem Anhang : siehe Amtsblatt des Europäischen Patentamts, Nr.12/82

**EP 2 431 631 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002005097 A